# EUROPEAN PATENT APPLICATION

(11) **EP 4 593 526 A1**
(43) Date of publication of application: **30.07.2025**
(21) Application number: 24215517.4
(22) Date of filing: 26.11.2024
(51) Int. Cl.: H05B 1/02, A21B 1/22, A21B 1/48

(54) **CONTROL METHODS FOR INFRARED CONVEYOR OVENS**

(30) Priority: 23.01.2024 US 202418420629
(71) Applicant: The Middleby Corporation, Elgin, IL 60120 (US)
(72) Inventor: CHRISTENSEN, Kenneth Andrew, Elgin, Illinois, 60120 (US)
(74) Representative: Barker Brettell LLP

(57) **Abstract**

Conveyer ovens and methods for controlling same. One example conveyor (140) over includes an electronic processor (205) configured to: determine a first duty cycle for a first heating element (350); determine a second duty cycle for a second heating element (355); actuate a first relay (325, 425) that controls a current flow to the first heating element (350) based on the first duty cycle to energize the first heating element (350) during a first duty cycle interval; and actuate a second relay (330, 430) that controls a current flow to the second heating element (355) based on the second duty cycle to energize the second heating element (355) during a second duty cycle interval. The second duty cycle interval begins after a delay period from a start of the first duty cycle interval has elapsed.

## Description

### BACKGROUND

Conveyor ovens provide an automated platform for cooking and baking a variety of food products in high-volume kitchens with consistent quality results. Conveyor ovens often include multiple heating elements positioned in an oven compartment and a conveyor that moves food products through the oven compartment. Conveyor oven control systems selectively actuate the heating elements to achieve and maintain temperature setpoints in the oven compartment.

### BRIEF DESCRIPTION OF THE SEVERAL VIEWS OF THE DRAWINGS

In the accompanying figures similar or the same reference numerals may be repeated to indicate corresponding or analogous elements. These figures, together with the detailed description, below are incorporated in and form part of the specification and serve to further illustrate various embodiments of concepts that include the claimed invention, and to explain various principles and advantages of those embodiments.
FIG. 1 is a sectional view of a conveyor oven, according to some examples.
FIG. 2 schematically illustrates an electronic controller for a conveyor oven, according to some examples.
FIG. 3 is a circuit diagram of the conveyor oven of FIG. 1, according to some examples.
FIG. 4 is a circuit diagram of the conveyor oven of FIG. 1, according to some examples.
FIG. 5 schematically illustrates the conveyor oven of FIG. 1, according to some examples.
FIGS. 6A and 6B are graphs illustrating control sequences for operating the conveyor oven of

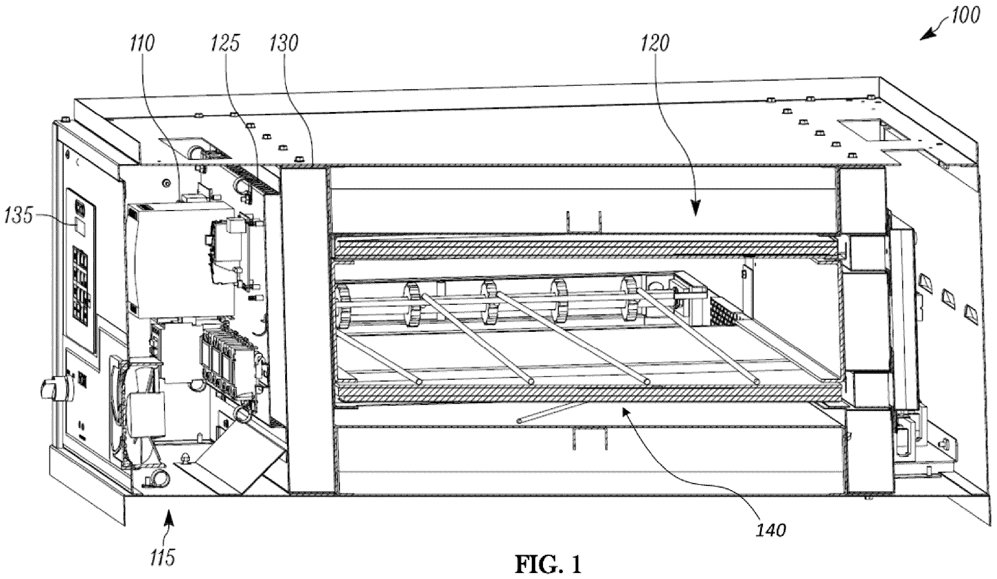

FIG. 1, according to some examples.

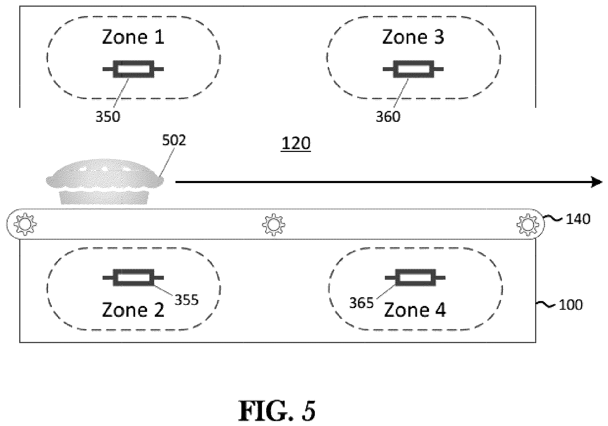

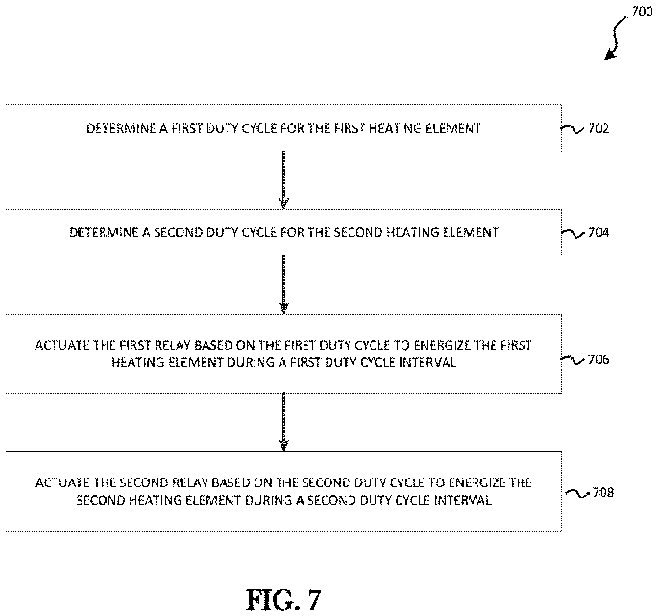

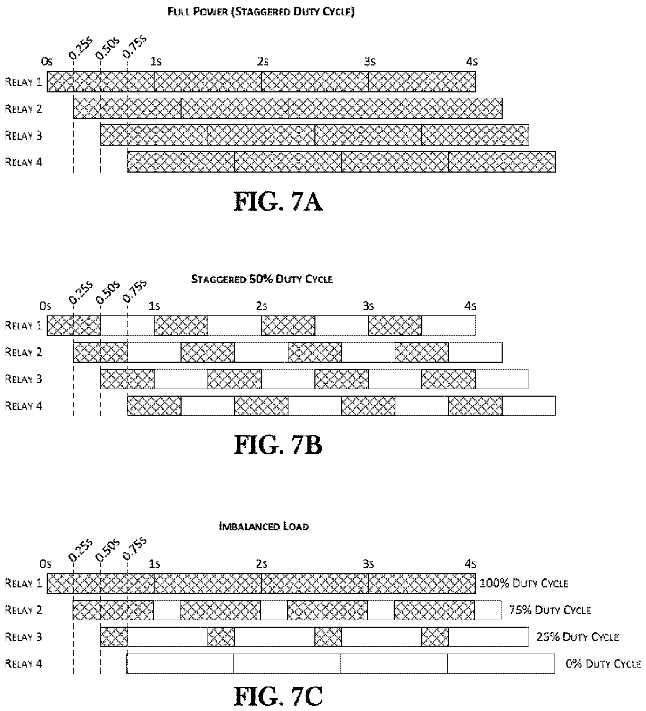

FIG. 7 is a flowchart illustrating a method for controlling the conveyor oven of FIG. 5 using staggered duty cycles to reduce current spikes, according to some examples.
FIGS. 7A-7C are graphs illustrating control sequences for operating the conveyor oven of FIG. 1 using staggered duty cycle intervals, according to some examples.

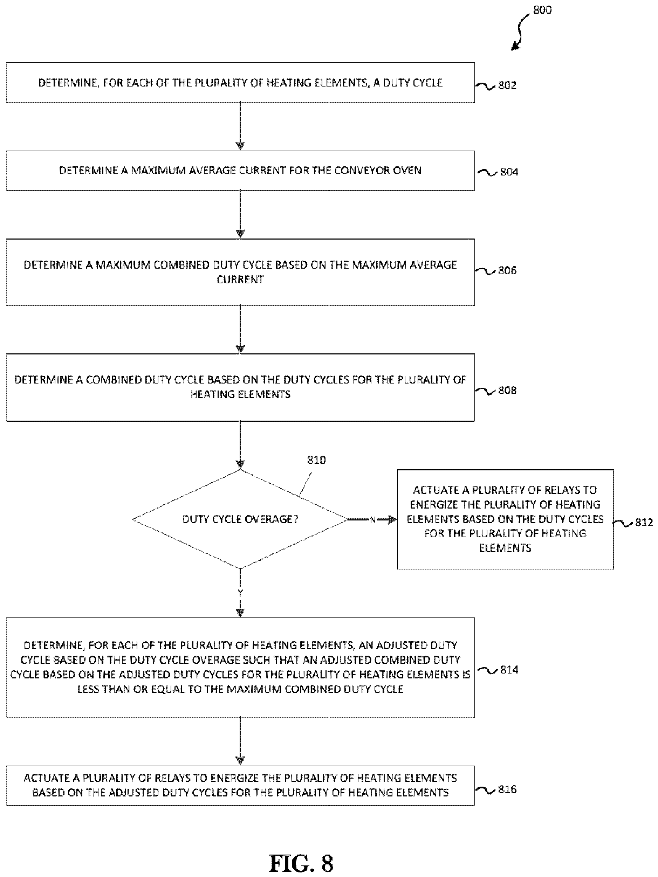

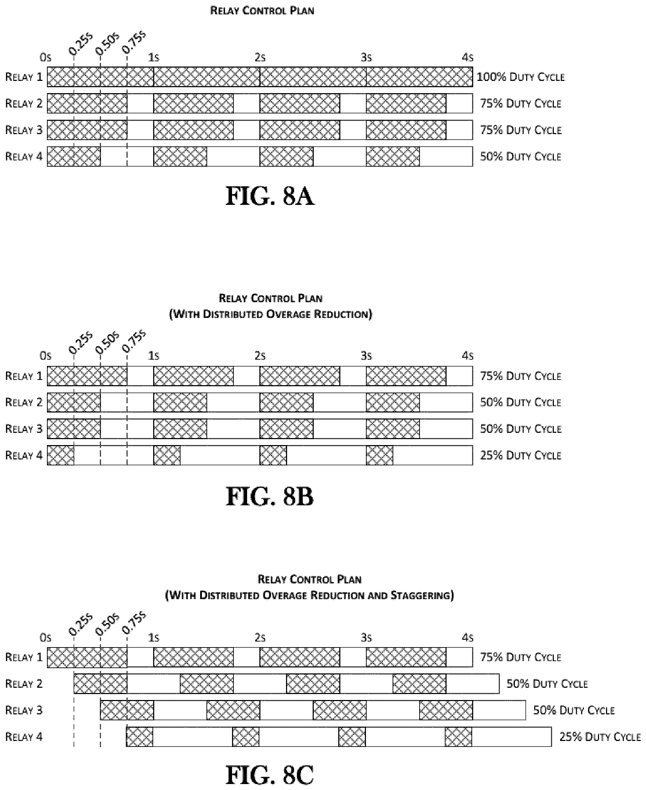

FIG. 8 is a flowchart illustrating a method for controlling the conveyor oven of FIG. 5 to meet average current limits while increasing the use of the maximum allowable current, according to some examples.
FIGS. 8A-8C are graphs illustrating control sequences for operating the conveyor oven of FIG. 1 with duty cycle overage reduction, according to some examples.

Skilled artisans will appreciate that elements in the figures are illustrated for simplicity and clarity and have not necessarily been drawn to scale. For example, the dimensions of some of the elements in the figures may be exaggerated relative to other elements to help improve understanding of embodiments of the present disclosure.

The system, apparatus, and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

### DETAILED DESCRIPTION OF THE INVENTION

Conveyor ovens may include multiple infrared heating elements positioned in an oven compartment. The infrared heating elements are electrically powered and selectively actuated to achieve and maintain temperature setpoints in the oven compartment. During peak-loads, for example, on a cold startup of the conveyor oven or when moving to a higher temperature setpoint, the current draw of the heating elements may exceed applicable current limits.

To address these concerns, some conveyor ovens may limit the number of heating elements, which can be simultaneously energized. In other instances, overall duty cycles may be reduced to account for meet current limits. However, such techniques may result in reduced oven performance (e.g., slower heat up and cook times) because restrictions on the simultaneous energizing may prevent the use of some control sequences. Such techniques can also be inefficient. They keep instantaneous current draws below current limits. However, they may also result in an average current draw much lower than the allowable limit. As such, available current goes unused instead of being used to heat the conveyor oven more quickly, while still meeting current limits. In addition, such techniques to not address current spikes, which may result from energizing multiple heating elements simultaneously. Current spikes may lead to electrical noise in nearby systems and increase wear and tear on components.

Thus, there exists a need for an improved technical method, device, and system for controlling conveyor ovens to increase available current usage while limiting current spikes.

In accordance with one example embodiment, a conveyor oven is provided. The conveyor oven includes: an oven compartment; a first heating element disposed in the oven compartment; a first relay that controls a current flow to the first heating element; a second heating element disposed in the oven compartment; a second relay that controls a current flow to the second heating element; a power supply that receives external power and distributes internal power to the first heating element and the second heating element; a memory; and an electronic processor coupled to the memory, the power supply, the first relay, and the second relay. The electronic processor is configured to retrieve, from the memory, executable instructions that, when executed by the electronic processor, cause the electronic processor to: determine a first duty cycle for the first heating element; determine a second duty cycle for the second heating element; actuate the first relay based on the first duty cycle to energize the first heating element during a first duty cycle interval; and actuate the second relay based on the second duty cycle to energize the second heating element during a second duty cycle interval. The second duty cycle interval begins after a delay period from a start of the first duty cycle interval has elapsed.

In accordance with a second example embodiment, a system for providing a conveyor oven is provided. The system includes: a memory; and an electronic processor coupled to the memory and a plurality of relays. The electronic processor is configured to retrieve, from the memory, executable instructions that, when executed by the electronic processor, cause the electronic processor to: determine, for each of a plurality of heating elements, a duty cycle; determine a maximum average current for the conveyor oven; determine a maximum combined duty cycle based on the maximum average current; determine a combined duty cycle based on the duty cycles for the plurality of heating elements; compare the maximum combined duty cycle to the combined duty cycle to determine a duty cycle overage; determine, for each of the plurality of heating elements, an adjusted duty cycle based on the duty cycle overage such that an adjusted combined duty cycle based on the adjusted duty cycles for the plurality of heating elements is less than or equal to the maximum combined duty cycle; and actuate a plurality of relays to energize the plurality of heating elements based on the adjusted duty cycles for the plurality of heating elements.

In accordance with a third example embodiment, a conveyor oven is provided, which includes aspects of the first and second embodiments presented above.

Each of the above-mentioned example embodiments will be discussed in more detail below, starting with example conveyor oven and architectures of the systems in which the embodiments may be practiced, followed by an illustration of processing blocks for achieving an improved technical method, device, and system for controlling conveyor ovens.

Further advantages and features consistent with this disclosure will be set forth in the following detailed description, with reference to the figures.

Referring now to the drawings, and in particular FIG. 1, a sectional view of an example conveyor oven 100 is provided. In the illustrated example, the conveyor oven includes an electronic controller 110, located in a control cabinet 115. In the illustrated example, the control cabinet 115 is adjacent to an oven compartment 120. The electronic controller 110 and various electrical components (e.g., power supplies, relays, and the like) are mounted to a frame 125, which is provided on an interior portion of the control cabinet 115. The frame 125 is coupled to an insulated panel 130, which separates the oven compartment 120 from the control cabinet 115. The electronic controller 110 is coupled to other components located in the control cabinet 115. Such components may include, for example, circuit breakers, fuses, power transformers, converters, cooling fans, manual switches, relays, and conveyor controls. In the illustrated example, the conveyor oven 100 also includes a user interface 135, which is coupled to the electronic controller 110.

The user interface 135 may include one or more input mechanisms (e.g., a touch screen, a keypad, a button, a knob, and the like), one or more output mechanisms (e.g., a display, a printer, a speaker, and the like), or a combination thereof. The user interface 135 may include a graphical user interface (e.g., presented on a conventional or touchscreen display) that enables an operator to control and configure the electronic controller 110 and that enables the electronic controller 110 to present an output to the user. The user interface 135 may be located externally to the electronic controller 110 or be integrated with the electronic controller 110. For example, the user interface 135 may be mounted on an exterior surface of the control cabinet 115 for ease of access by an operator. Among other things, the user interface 135 allows an operator to adjust the temperature settings (e.g., temperature setpoints) of individual heating zones and to set the conveyor speed. Temperature setpoints and conveyor speed setpoints may be programed and saved as multiple presets. In some aspects, presets allow an operator to recall the temperature setpoints and conveyor speed setpoints with a single button on the user interface 135. The user interface 135 displays messages to the operator including, for example, an active preset, a time and date, current temperatures, current setpoints, and error messages.

The oven compartment 120 includes a conveyor 140, which transports product (e.g., food to be cooked by the conveyor oven 100) through the oven compartment 120. For example, the electronic controller 110 may control one or more electric motors (not shown) to operate the conveyor 140. Although not illustrated, the conveyor oven 100 may also include one or more temperature sensors (e.g., thermocouples), which are positioned in the oven compartment for sensing temperature at various points within the oven compartment.

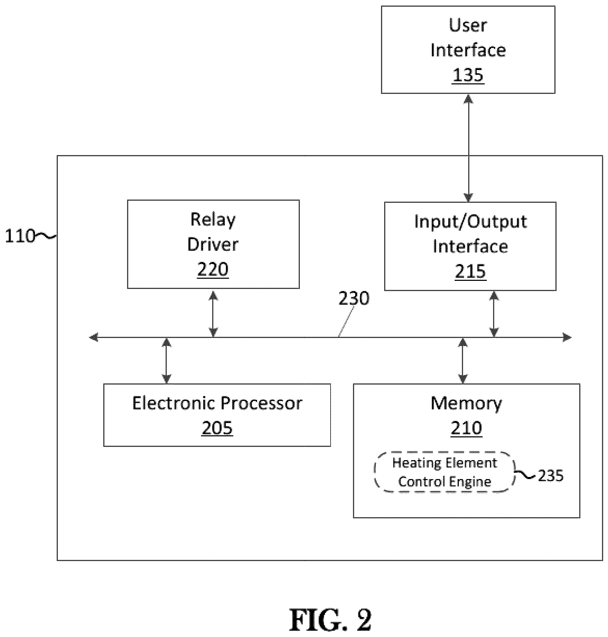

FIG. 2 schematically illustrates an example electronic controller 110. In the example provided, the electronic controller 110 includes an electronic processor 205, a memory 210, an input/output interface 215, and a relay driver 220. The illustrated components, along with other various modules and components (not shown) are coupled to each other by or through one or more control or data buses (for example, a bus 230) that enable communication therebetween.

The electronic processor 205 obtains and provides information (for example, from the memory 210 and/or the input/output interface 215) and processes the information by executing one or more software instructions or modules, capable of being stored, for example, in a random access memory ("RAM") area of the memory 210 or a read only memory ("ROM") of the memory 210 or another non-transitory computer readable medium (not shown). The software can include firmware, one or more applications, program data, filters, rules, one or more program modules, and other executable instructions. The electronic processor 205 is configured to retrieve from the memory 210 and execute, among other things, software to carry out the methods described herein.

The memory 210 can include a program storage area and a data storage area. The program storage area and the data storage area can include combinations of different types of memory, as described herein. In the embodiment illustrated, the memory 210 stores, among other things, a heating element control engine 235. The heating element control engine 235 includes algorithms for controlling the heating elements of the conveyor oven 100, as described herein. In some aspects, the heating element control engine 235 implements proportional-integral-derivative (PID) control to determine and execute control sequences for actuating relays to energize the heating elements. In some embodiments, the heating element control engine 235 also carries out the methods described herein.

The input/output interface 215 is an electronic interface configured to receive input and to provide system output. The input/output interface 215 obtains information and signals from, and provides information and signals to, (for example, over one or more wired and/or wireless connections) devices both internal and external to the electronic controller 110. The input/output interface 215 may include one or more wireless transceivers for wirelessly communicating over wireless networks. Alternatively, or additionally, the input/output interface 215 may include a wired transceiver, such as an Ethernet transceiver, for communicating over a wired network or a dedicated wired connection.

As illustrated in FIG. 2, in some examples, the user interface 135 interconnects with the electronic controller 110 via the input/output interface 215. In other examples, the user interface 135 is integrated into the electronic controller 110.

The illustrated example also includes a relay driver 220. As described herein, the electronic processor 205 controls the heating elements of the conveyor oven 100 by actuating relays via the relay driver 220. In some aspects, a single relay driver 200 is capable of interfacing with multiple relays. In other aspects, multiple relay drivers are used.

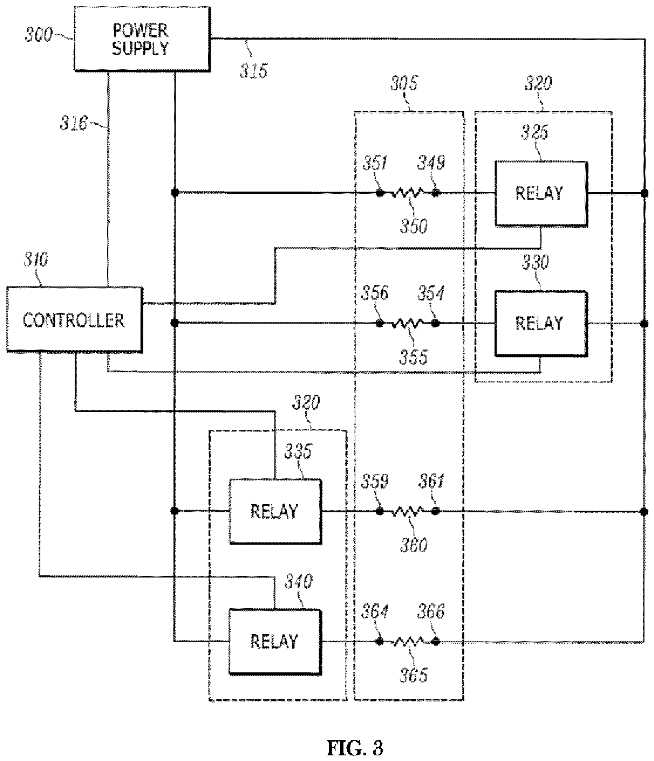

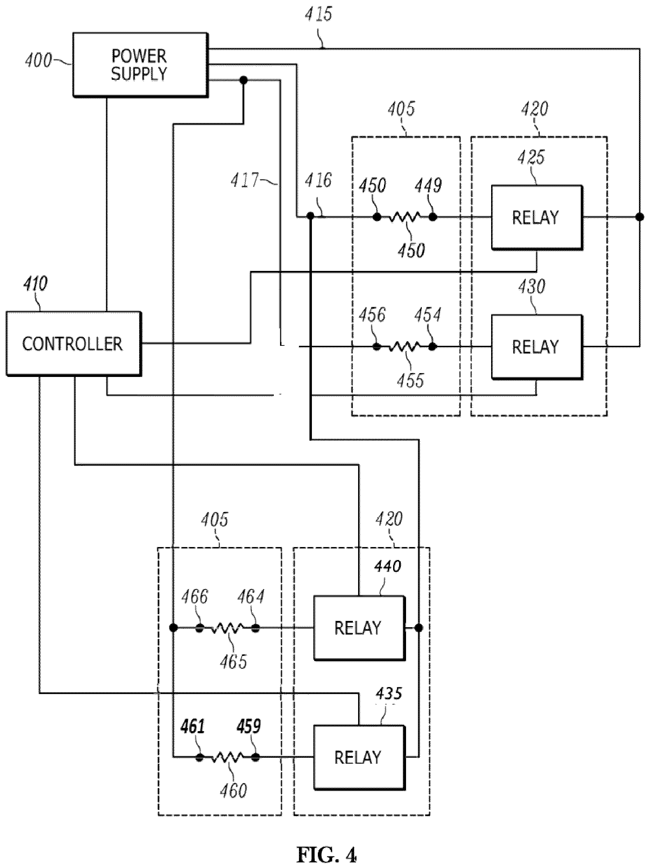

FIGS. 3 and 4 illustrate circuit diagrams of two four-heating-element embodiments of the conveyor oven 100. The devices, systems, and methods presented herein are described in terms of a four-heating element conveyor oven. However, it should be understood that the methods described herein are not limited to such examples and are applicable to any conveyor oven that includes two or more heating elements.

FIG. 3 is a circuit diagram for an example of a single-phase, four-heating-element embodiment of the conveyor oven 100. A power supply 300 includes electrical components configured to provide current to the heating elements 305 and to an electronic controller 310. In the example presented, the heating elements 305 are arranged in zones, for example, as described herein with respect to FIG. 5. It should be noted that the Zone 1 heating element 350, the Zone 2 heating element 355, the Zone 3 heating element 360, and the Zone 4 heating element 365 are collectively referred to herein as the heating elements 305. In some examples, the heating elements 305 may be grouped in the conveyor oven 100 in configurations other than in zones as described herein. In the illustrated example, the heating elements 305 are infrared heating elements. In other examples, the heating elements 305 may be resistive heating elements and may include multiple bulbs or coils controlled by a single relay.

The power supply 300 receives external power (e.g., from a connection to an electrical grid) and includes electrical and electronic components for modulating the power to provide internal power for use within the conveyor oven 100. The power supply 300 includes an L1 line 315 and an L2 line 316.

The electronic controller 310 includes similar components and is configured similarly to the electronic controller 110. The electronic controller 310 controls current to the heating elements 305 is by actuating the relays 320, as described herein. The electronic controller 310 is coupled to the relays 320 (e.g., via the relay driver 220) at each of the respective control inputs of the relays 320.

The relays 320 include a first relay 325, a second relay 330, a third relay 335, and a fourth relay 340. In the illustrated example, the relays 320 are solid-state relays. Alternatively, the relays 320 may be electro-mechanical relays (e.g., contactors) or alternative forms of automated switches. The L1 line 315 connects to an input of the first relay 325 and an input of the second relay 330. The L2 line 316 connects to an input of the third relay 335 and an input of the fourth relay 340. An output of the first relay 325 connects to a first terminal 349 of the Zone 1 heating element 350. A second terminal 351 of the Zone 1 heating element 350 connects to the L2 line 316. Similarly, the second relay 330 connects to a first terminal 354 of the Zone 2 heating element 355, and a second terminal 356 of the Zone 2 heating element 355 connects to the L2 line 316. An output of the third relay 335 connects to a first terminal 359 of the Zone 3 heating element 360, and a second terminal 361 of the Zone 3 heating element 360 connects to L1 line 315. Similarly, an output of the fourth relay 340 connects to a first terminal 364 of the Zone 4 heating element 365, and a second terminal 366 of the Zone 4 heating element 365 connects to L1 line 315.

The conveyor oven 100 is configured to operate with either single-phase power or three-phase power in a single-phase configuration or a three-phase configuration. When connected to single-phase power, all of the heating elements 305 and the relays 320 are connected between the line 315 and the line 316. When connected to three-phase power and configured to operate in single-phase, two phases of the three-phase power are used to supply power to the heating elements 305. When connected to three-phase power and configured to operate with three-phase power, the heating elements 305 are connected between the different phases of the three-phase power. Thus, a load evenly balanced between phases may be achieved with a conveyor oven 100 that operates on three-phase power with a multiple of three heating elements 305.

FIG. 4 is a circuit diagram for an example of a three-phase, four-heating-element embodiment of the conveyor oven 100. In the example presented, the heating elements 405 are arranged in zones, for example, as described herein with respect to FIG. 5. It should be noted that the Zone 1 heating element 450, the Zone 2 heating element 455, the Zone 3 heating element 460, and the Zone 4 heating element 465 are collectively referred to herein as the heating elements 405. In some examples, the heating elements 405 may be grouped in the conveyor oven 100 in configurations other than in zones as described herein. In the illustrated example, the heating elements 405 are infrared heating elements. In other examples, the heating elements 405 may be resistive heating elements and may include multiple bulbs or coils controlled by a single relay.

The relays 420 include a first relay 425, a second relay 430, a third relay 435, and a fourth relay 440. In the illustrated example, the relays 320 are solid-state relays. Alternatively, the relays 320 may be electro-mechanical relays (e.g., contactors) or alternative forms of automated switches. A three-phase power supply 400 is connected by three power lines, an L1 line 415 (a first phase), an L2 line 416 (a second phase), and an L3 line 417 (a third phase) to the conveyor oven 100. The L1 line 415 connects to an input of a first relay 425 and to an input of a second relay 430. An output of the first relay 425 is connected to a first terminal 449 of a Zone 1 heating element 450. A second terminal 451 of the Zone 1 heating element 450 is connected to the L2 line 416. An output of the second relay 430 is connected to a first terminal 454 of a Zone 2 heating element 455, and the second terminal 456 of the Zone 2 heating element 455 is connected to an L3 line 417. The L2 line 416 is connected to an input of a third relay 435 and to an input of a fourth relay 440. An output of the third relay 435 is connected to a first terminal 459 of a Zone 3 heating element 460, and a second terminal 461 of the Zone 3 heating element 460 is connected to the L3 line 417. Similarly, an output of the fourth relay 440 is connected to a first terminal 464 of a Zone 4 heating element 465, and a second terminal 466 of the Zone 4 heating element 465 is connected to the L3 line 417.

The electronic controller 410 includes similar components and is configured similarly to the electronic controller 110. The electronic controller 410 controls current to the heating elements 305 is by actuating the relays 420, as described herein. The electronic controller 410 is coupled to the relays 420 (e.g., via the relay driver 220) at each of the respective control inputs of the relays 420.

Although the Zone 4 heating element 465 and the fourth relay 440 are illustrated across the L2 line 416 and the L3 line 417, the Zone 4 heating element 465 and the fourth relay 440 may positioned across any two of the three phases. Since the Zone 4 heating element 465 and the fourth relay 440 are located parallel to the Zone 3 heating element 460 and are positioned across the L2 line 416 and the L3 line 417, removing the zone 4 heating element 465 may provide an evenly distributed load. Alternatively, additional heating elements and associated relays may be added to the design without departing from the scope of the examples presented herein.

FIG. 5 schematically illustrates an example of a four-heating-element embodiment of the conveyor oven 100. As illustrated in FIG. 5, the oven compartment 120 includes four heating zones: Zone 1, Zone 2, Zone 3, and Zone 4. Each zone represents a volume of space within the oven compartment 120. Each Zone includes a heating element 305. As food product 502 is moved through the oven compartment 120 by the conveyor 140, the electronic controller 110 controls the heating elements 305 to heat their respective zones to temperature setpoints (e.g., as selected by an operator of the conveyor oven 100 via the user interface 135). Temperature setpoints for each of Zone 1, Zone 2, Zone 3, and Zone 4 may be set by presets based on, for example, the type of food product 502 being cooked by the conveyor oven 100. In some examples, each Zone includes a temperature sensor (e.g., a thermocouple), which feeds temperature data to the electronic controller 110. In the illustrated example, the Zones and heating elements are those described above with respect to FIG. 3. This should not be considered limiting. The illustrated example and the control methods described herein are also applicable to a three-phase design, such as that described with respect to FIG. 4.

The electronic controller 110, in particular, the electronic processor 205, controls the heating elements 305 to bring their respective Zones to their temperature setpoints. In some examples, the electronic controller 110 operates each of the heating elements 305 according to a duty cycle. A duty cycle is the amount of time that the heating element is energized during a duty cycle interval. In the examples set forth below, the duty cycles are expressed as a percentage of time during a one second duty cycle interval. Duty cycle intervals repeat over time. In the examples that follow, four one-second duty cycles are illustrated for each of four relays: Relay 1, Relay 2, Relay 3, and Relay 4. Relays 1, 2, 3, and 4 correspond to Zones 1, 2, 3, and 4, respectively. Relays 1, 2, 3, and 4 are switched on and off to energize heating elements 350, 355, 360, and 365, respectively.

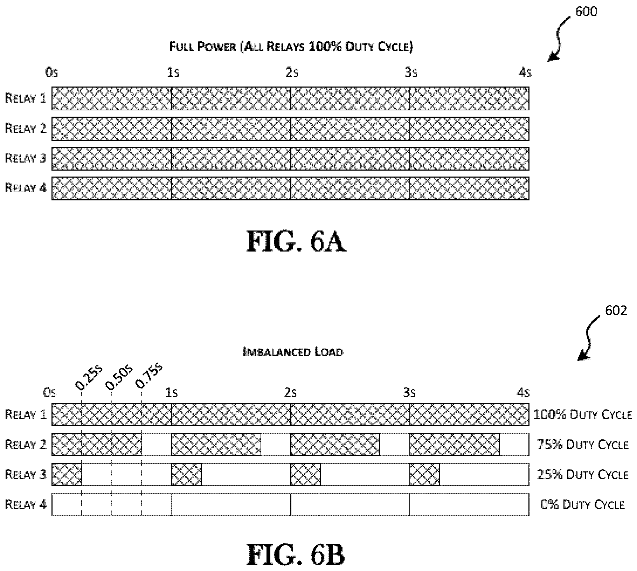

For example, FIG. 6A is a graph 600 illustrating a control sequence with a 100% duty cycle for all four relays over four one-second duty cycle intervals. This control sequence operates all of the heating elements 305 at full power continuously. This control sequence might be used to, for example, rapidly bring the oven compartment 120 up to a temperature setpoint. However, to regulate temperature of the Zones over time to achieve and maintain their temperature setpoint, it is necessary to energize and de-energize the heating elements 305 as the conveyor oven 100 operates.

In addition, the scenario represented by FIG. 6A assumes a balanced load (e.g., no change over time in the requested temperature setpoint for each of the four Zones). For a balanced load, each of the heating elements 305 is operated at the same duty cycle (100% in FIG. 6A). An example of a balanced load may be a pre-heating scenario, where food is not being cooked. When a conveyor oven is used to cook food, it often presents an imbalanced load. Different food products may require different temperatures throughout oven. For example, as cold food product enters, more heat may be required, whereas less heat may be required as the food product travels through. In addition, some food products may require more or less heat to be applied on the top of bottom of the food product or during different stages of cooking (e.g., initially searing an item when it enters the oven compartment 120).

FIG. 6B is a graph 602, which illustrates an example of a control sequence for an imbalanced load. As illustrated, Relay 1 has a 100% duty cycle, Relay 2 has a 75% duty cycle, Relay 3 has a 25% duty cycle, and Relay 4 has a 0% duty cycle. One effect of an imbalanced load is that the resulting control sequence may lead to current spikes. For example, as shown in FIG. 6B, during the first .25s of each of the four duty cycle intervals illustrated, three of four relays are activated. During the final .25s of each of the four duty cycle intervals illustrated, only one of four relays is activated. This may result in a spike in current draw as the power requirement triples at the start of each duty cycle interval.

FIG. 7 illustrates an example method 700 for, among other things, controlling the heating elements of a conveyor oven using staggered duty cycles to reduce current spikes. Although the method 700 is described in conjunction with the conveyor oven 100 as described herein with respect to FIGS. 1, 3, and 5, the method 700 may be used with other types of multiple-heating-element ovens. In addition, the method 700 may be modified or performed differently than the specific example provided.

By way of example, the method 700 is described as being performed by the electronic controller 110 and, in particular, the electronic processor 205. However, it should be understood that portions of the method 700 may be performed by other devices, including for example, an external computing device communicatively coupled to the conveyor oven 100. For ease of description, the method 700 is described partially in terms of a conveyor oven having two heating elements. However, the method 700 may be applied to conveyor ovens having two or more heating elements, operating as described herein.

The method 700 begins, at block 702, with the electronic processor 205 determining a first duty cycle for the first heating element. For example, the electronic processor 205 may receive a temperature setpoint for Zone 1 (e.g., from the user interface 135) and provide the temperature setpoint to the heating element control engine 235, which implements a PID control to determine the first duty cycle based on the requested temperature setpoint and a measured temperature for Zone 1 (e.g., as sensed by a thermocouple).

At block 704, the electronic processor 205 determines a second duty cycle for the second heating element. For example, the electronic processor 205 may determine the second duty cycle using the same PID control as used for the first duty cycle.

At block 706, the electronic processor 205 actuates the first relay 325 (e.g., via the relay driver 220) based on the first duty cycle to energize the first heating element 350 during a first duty cycle interval. For example, as illustrated in FIG. 7A, the first duty cycle may be 100%.

At block 706, the electronic processor 205 actuates the second relay 330 based on the second duty cycle to energize the second heating element 355 during a second duty cycle interval. However, rather than using synchronized duty cycle intervals, electronic processor 205 utilizes staggered duty cycle intervals, where the second duty cycle interval begins after a delay period (e.g., a duty cycle offset value) from a start of the first duty cycle interval has elapsed. For example, as illustrated in FIG. 7A, the first heating element (labeled Relay 1) has a duty cycle interval beginning at zero seconds and each of the second through fourth heating elements (labeled Relays 2-4) has a duty cycle interval offset from the preceding duty cycle interval by a duty cycle offset (in the illustrated example, one quarter second). The duty cycle interval period of one second and the duty cycle interval offset of one quarter second are examples only. Other values are possible without deviating from the scope of the disclosed examples. In the illustrated example, the duty cycle intervals are identical in duration. However, other configurations are possible.

The duty cycle offset is some fraction of the duty cycle duration. In some examples, the duty cycle offset is determined based on a maximum allowable current spike. For example, the electronic processor 205 may determine a duty cycle offset that results in current spikes under the maximum allowable current spike, based on the first and second duty cycles. Alternatively, or in addition, the duty cycle offset may be determined based on a maximum average current for the conveyor oven. For example, the electronic processor 205 may determine a duty cycle offset that results in an average current that falls under the maximum average current, based on the first and second duty cycles.

In some examples, the electronic processor 205 receives a measured temperature for the oven compartment 120 (e.g., for a Zone of the oven compartment 120). The electronic processor 205 is configured to continue to actuate the first relay based on the first duty cycle and the second relay based on the second duty cycle by repeating the first duty cycle interval and the second duty cycle interval while the measured temperature is less than a user adjustable temperature setpoint (i.e., until the temperature setpoint is reached).

As illustrated in FIGS. 7A-7C, the method 700 may be applied to reduce current spikes during operation of the conveyor oven 100. For example, the control sequence illustrated in FIG. 7A applies 100% power. In FIG. 6A, full power is also called for. All of the relays are activated simultaneously, requiring a full current draw in the same instant. However, when staggered duty cycle intervals are applied to the same control sequence, as illustrated in FIG. 7A, the initial startup current spike is reduced as only one heating element is energized at a time until all heating elements are energized, whereupon current draw remains constant for the remaining duty cycle intervals illustrated.

FIG. 7B illustrates staggered duty cycle intervals where full power is not called for, but all four relays are still activated at some point in the control sequence. As illustrated, a 50% duty cycle is specified for each heating element. Using the illustrated control sequence, only two heating elements are energized at any one time, reducing total current draw by 50%. In addition, by introducing the staggering of the duty cycle intervals, current spikes are significantly reduced. In the first half of the first duty cycle interval, the current draw increases twice, as the first and second relays are switch on in succession. Thereafter, as illustrated, because of the offset duty cycle intervals, there are always two relays switch on and two relays switched off. The average current draw remains the same for successive duty cycle intervals. As shown in FIG. 7B, without the duty cycle interval staggering, power would have to jump from zero to full at the start of each duty cycle interval, resulting in a current spike four times larger than what is realized using duty cycle interval staggering.

FIGS. 7A and 7B illustrate a control sequence where a balanced load is requested. However, staggered duty cycle intervals are also applicable to imbalanced loads. As described above with respect to FIG. 6B, the illustrated imbalanced load control sequence results in a current spike during the first quarter of each duty cycle interval, as Relays 1-3 are switched from off to on simultaneously. As illustrated in FIG. 7C, applying staggered duty cycle intervals to this control sequence results in each of the relays to be switched on for the same amount of time and for the same average current draw. As shown in FIG. 7C, only one relay is switched from off to on at any given time in the sequence, resulting in a reduction in the size of the current spikes over those caused by the sequence being operated with synchronized duty cycle intervals (see FIG. 6B).

As noted, another consideration, in addition to current spikes, is the average current draw over time. In some instances, it may be necessary to limit the average current draw for the conveyor oven 100 to a maximum percentage of its total potential current draw (i.e., the total current draw if all heating elements are operated at 100% duty cycle). For example, the electrical infrastructure where the conveyor oven is deployed may not support the total potential current draw (e.g., due to applicable electrical codes). In another example, the total available power supply where the conveyor oven is deployed may not allow for the oven to operate using its total potential current draw (e.g., the conveyor oven may share power with a number of other high current capacity devices). Regardless of the reason, in some instances, a maximum average current may be applied to the conveyor oven 100 (e.g., expressed as a percentage).

One approach to operating within a maximum average current requirement is to modulate the operation of the relays to limit the number of simultaneously energized heating elements proportionally to the maximum average current requirement. For example, if the maximum average current requirement is 50%, then only two out of four heating elements may be energized at once. However, depending on the control sequence called for, there may be times where only one of the heating elements is energized, resulting in an average current less than the maximum allowed. This leaves available unused current capacity. Without a mechanism for distributing the available capacity, the single loaded zone would only operate at the limited duty cycle, even where operating the zone at full duty cycle would not cause the conveyor oven to exceed current limitations. Even if there were available performance (i.e., the ability to produce heat by energizing the heating element(s) for the zone), a zone with higher demand would not utilize the available performance to achieve the desired output. Accordingly, this approach may reduce the overall performance of the conveyor oven because it limits the number of heating elements that can be simultaneously energized, whether or not there is available current.

To address this concern, embodiments presented herein provide for capacity distribution, which would allow any combination of zones to utilize power at any percentage of maximum until the current limitations are reached, thereby improving performance in mixed-load situations with current limitations on the entire conveyor oven. For example, FIG. 8 illustrates a method 800 for, among other things, controlling the heating elements of a conveyor oven to meet average current limits while increasing the use of the maximum allowable current. Although the method 800 is described in conjunction with the conveyor oven 100 as described herein with respect to FIGS. 1, 3, and 5, the method 800 may be used with other types of multiple-heating-element ovens. In addition, the method 800 may be modified or performed differently than the specific example provided.

By way of example, the method 800 is described as being performed by the electronic controller 110 and, in particular, the electronic processor 205. However, it should be understood that portions of the method 800 may be performed by other devices, including for example, an external computing device communicatively coupled to the conveyor oven 100. The method 800 may be applied to conveyor ovens having two or more heating elements, operating as described herein.

The method 800 begins, at block 802, with the electronic processor 205 determining, for each of the plurality of heating elements 305, a duty cycle. For example, as described above with respect to the method 700, the electronic processor 205 may execute the heating element control engine 235 to determine the duty cycles via PID control.

At block 804, the electronic processor 205 determines a maximum average current for the conveyor oven 100. For example, the electronic processor 205 may determine the maximum average current by receiving it as an input from the user interface 135 or by retrieving in from the memory 210. In some examples, the maximum average current is an absolute value (e.g., in amperes). In some examples, the maximum average current is a relative value (e.g., a percentage).

At block 806, the electronic processor 205 determines a maximum combined duty cycle based on the maximum average current. For example, the algorithm may apply the equation MCDC = TCDC*MAC, where MCDC is the maximum combined duty cycle, TCDC is the total combined duty cycle, and MAC is the maximum average current. For example, where a conveyor oven has four heating element/relay combinations, the total combined duty cycle is 400% (100% for each of the four relays). If the maximum average current were 75%, then the maximum combined duty cycle would be 300%. The individual relay's duty cycles can be anywhere between zero and one hundred percent, as long as the maximum combined duty cycle is not exceeded.

At block 808, the electronic processor 205 determines a combined duty cycle based on the duty cycles for the plurality of heating elements 305 (e.g., by adding the duty cycles).

At block 810, the electronic processor 205 compares the maximum combined duty cycle to the combined duty cycle to determine whether there is a duty cycle overage. When the combined duty cycle exceeds the maximum combined duty cycle, the difference is the duty cycle overage.

At block 812, where there is no duty cycle overage, the electronic processor 205 actuates the plurality of relays 320 to energize the plurality of heating elements based on the duty cycles for the plurality of heating elements (e.g., operates the control sequence as called for by the PID control). In one example, the maximum average current is 75%, resulting in a maximum combined duty cycle of 300%. In this example, if the heating element control algorithm called for a control sequence where Relays 1 and 2 operate at 100% duty cycle and Relays 3 and 4 operate at 50% duty cycle, the resulting combined duty cycle of would be 300%. In this example, the control sequence could be executed as called for without exceeding the maximum average current.

At block 814, where there is a duty cycle overage, the electronic processor 205 determines, for each of the plurality of heating elements 305, an adjusted duty cycle based on the duty cycle overage such that an adjusted combined duty cycle based on the adjusted duty cycles for the plurality of heating elements is less than or equal to the maximum combined duty cycle.

For example, assume the maximum average current is 50%, resulting in a maximum combined duty cycle of 200%. In this example, the heating element control algorithm calls for a control sequence where Relay 1 operates at 100%, Relays 2 and 3 operate at 75%, and Relay 4 operates at 50%, resulting in a combined duty cycle of 300%. This control sequence is illustrated in FIG. 8A. This combined duty cycle exceeds the maximum combined duty cycle by 100% and must be reduced by that amount of duty cycle overage to avoid exceeding the maximum average current.

FIG. 8B illustrates how the electronic processor 205 may reduce the maximum combined duty cycle by evenly distributing to the heating elements 305 reductions in duty cycle to eliminate the duty cycle overage. As illustrated in FIG. 8B, each heating element has its duty cycle reduced by 25%, resulting in a new combined duty cycle of 200%, which does not exceed the maximum. As a result, the maximum current draw is 100% of the total at times, while the average current is kept at 50%. This allows the conveyor oven 100 to energize four heating elements simultaneously as necessary, while still meeting the maximum average current requirement.

Alternatively, the reductions in duty cycle may be distributed unevenly. For example, the duty cycle overage reduction may be distributed among the relays proportionally (e.g., based on their respective portion of the combined duty cycle). In another example, weighted values may be used to distribute the duty cycle overage reduction among the relays. Weights may be assigned to each relay based one or more other factors (e.g., the placement of the heating elements within the oven compartment 120, the operating direction of the conveyor 140, and the like). For example, with respect to the example illustrated in FIG. 5, Relay 1 may be weighted more heavily than the other relays because it has to heat the entrance of the oven compartment 120, where product enters the conveyor oven 100. In another example, Relay 4 may be weighted less heavily than the other relays because it is near the end of the conveyor 140 and less critical to the cooking process. Weights may be assigned based on the environment surrounding the conveyor oven 100 (e.g., ambient temperature, placement of the oven with respect to other sources of heat or cold, and the like).

Regardless of how the adjusted duty cycles are determined, at block 816, the electronic processor 205 actuates the plurality of relays 320 to energize the plurality of heating elements 305 based on the adjusted duty cycles for the plurality of heating elements 305. In some aspects, the electronic processor 205 repeats the method 800 while a temperature setpoint is not yet achieved.

In some aspects, regardless of how the overage reduction is distributed to meet the maximum average current requirement, the resulting duty cycles may result in current spikes. For example, as illustrated in FIG. 8B, a current spike will occur at the start of each duty cycle interval as all four relays are switched from off to on. To mitigate potential current spikes, in some instances, the heating element control algorithm may combine overage reduction distribution with duty cycle interval staggering, as described herein with respect to the method 700. FIG. 8C illustrates the application of duty cycle interval staggering to the control sequence of FIG. 8B. As shown in FIG. 8C, the heating elements are still energized on the same duty cycle as in FIG. 8B, but the maximum current draw is reduced to 75%, while the average current draw is maintained at 50%. This results in lower current spikes and a more power efficient operation of the conveyor oven 100.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Example embodiments are herein described with reference to flowchart illustrations and/or block diagrams of methods, apparatus (systems) and computer program products according to example embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some embodiments, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions which execute on the computer or other programmable apparatus provide blocks for implementing the functions/acts specified in the flowchart and/or block diagram block or blocks. It is contemplated that any part of any aspect or embodiment discussed in this specification can be implemented or combined with any part of any other aspect or embodiment discussed in this specification.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if embodiments described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage media include, but are not limited to, a hard disk (e.g., a solid state drive), a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. For example, computer program code for carrying out operations of various example embodiments may be written in an object-oriented programming language such as Java, Smalltalk, C++, Python, or the like. However, the computer program code for carrying out operations of various example embodiments may also be written in conventional procedural programming languages, such as the "C" programming language or similar programming languages. The program code may execute entirely on a computer, partly on the computer, as a stand-alone software package, partly on the computer and partly on a remote computer or server or entirely on the remote computer or server. In the latter scenario, the remote computer or server may be connected to the computer through a local area network (LAN) or a wide area network (WAN), or the connection may be made to an external computer (for example, through the Internet using an Internet Service Provider).

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0. 5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way but may also be configured in ways that are not listed.

The terms "coupled," "coupling," or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

As should be apparent from this detailed description above, the operations and functions of the electronic computing device are sufficiently complex as to require their implementation on a computer system, and cannot be performed, as a practical matter, in the human mind. Electronic computing devices such as set forth herein are understood as requiring and providing speed and accuracy and complexity management that are not obtainable by human mental steps, in addition to the inherently digital nature of such operations (e.g., a human mind cannot interface directly with RAM or other digital storage, cannot transmit or receive electronic messages, or switch heating elements on and off many times per second, among other features and functions set forth herein).

The following paragraphs provide various examples of the embodiments disclosed herein.

Example 1. A conveyor oven comprising: an oven compartment; a first heating element disposed in the oven compartment; a first relay that controls a current flow to the first heating element; a second heating element disposed in the oven compartment; a second relay that controls a current flow to the second heating element; a power supply that receives external power and distributes internal power to the first heating element and the second heating element; a memory; and an electronic processor coupled to the memory, the power supply, the first relay, and the second relay. The electronic processor is configured to retrieve, from the memory, executable instructions that, when executed by the electronic processor, cause the electronic processor to: determine a first duty cycle for the first heating element; determine a second duty cycle for the second heating element; actuate the first relay based on the first duty cycle to energize the first heating element during a first duty cycle interval; and actuate the second relay based on the second duty cycle to energize the second heating element during a second duty cycle interval; wherein the second duty cycle interval begins after a delay period from a start of the first duty cycle interval has elapsed.

Example 2. The conveyor oven of Example 1, wherein the first duty cycle interval has a first duration; and the second duty cycle interval has a second duration equal to the first duration.

Example 3. The conveyor oven of either of Examples 1 and 2, wherein the executable instructions, when executed by the electronic processor, further cause the electronic processor to: determine a maximum allowable current spike; and determine the delay period based on the first duty cycle, the second duty cycle, and the maximum allowable current spike.

Example 4. The conveyor oven of any of Examples 1-3, wherein the executable instructions, when executed by the electronic processor, further cause the electronic processor to: determine a maximum average current for the conveyor oven; and determine the delay period based on the first duty cycle, the second duty cycle, and the maximum average current.

Example 5. The conveyor oven of any of Examples 1-4, further comprising: a temperature sensor positioned within the oven compartment and coupled to the electronic processor; wherein the executable instructions, when executed by the electronic processor, further cause the electronic processor to: receive a measured temperature for the oven compartment; and continue to actuate the first relay based on the first duty cycle and the second relay based on the second duty cycle by repeating the first duty cycle interval and the second duty cycle interval while the measured temperature is less than a user adjustable temperature setpoint.

Example 6. The conveyor oven of any of Examples 1-5, further comprising: a third heating element disposed in the oven compartment; and a third relay that controls a current flow to the third heating element; wherein: the power supply distributes internal power to the third heating element; the electronic processor is coupled to the third relay; and the electronic processor is configured to retrieve, from the memory, executable instructions that, when executed by the electronic processor, cause the electronic processor to: determine a third duty cycle for the third heating element; and actuate the third relay based on the third duty cycle to energize the third heating element during a third duty cycle interval; wherein the third duty cycle interval begins after a delay period from a start of the second duty cycle interval has elapsed.

Example 7. The conveyor oven of Example 6, further comprising: a fourth heating element disposed in the oven compartment; and a fourth relay that controls a current flow to the fourth heating element; wherein: the power supply distributes internal power to the fourth heating element; the electronic processor is coupled to the fourth relay; and the electronic processor is configured to retrieve, from the memory, executable instructions that, when executed by the electronic processor, cause the electronic processor to: determine a fourth duty cycle for the fourth heating element; and actuate the fourth relay based on the fourth duty cycle to energize the fourth heating element during a fourth duty cycle interval; wherein the fourth duty cycle interval begins after a delay period from a start of the third duty cycle interval has elapsed.

Example 8. The conveyor oven of any of Examples 1-7, further comprising: a conveyor extending through the oven compartment; and a motor that drives the conveyor to convey product through the oven compartment.

Example 9. The conveyor oven of any of Examples 1-8, wherein the executable instructions, when executed by the electronic processor, further cause the electronic processor to: determine a maximum average current for the conveyor oven; determine a maximum combined duty cycle based on the maximum average current; determine a combined duty cycle based on the first duty cycle and the second duty cycle; compare the maximum combined duty cycle to the combined duty cycle to determine a duty cycle overage; and adjust the first duty cycle and the second duty cycle based on the duty cycle overage such that the combined duty cycle is less than or equal to the maximum combined duty cycle.

Example 10. The conveyor oven of Example 9, wherein adjusting the first duty cycle and the second duty cycle based on the duty cycle overage includes: reducing the first duty cycle by a first amount; and reducing the second duty cycle by a second amount; wherein the first amount and the second amount add up to the duty cycle overage.

Example 11. The conveyor oven of Example 10, wherein the first amount is equal to the second amount.

Example 12. The conveyor oven of Example 10, wherein the first amount is proportional to the first duty cycle; and the second amount is proportional to the second duty cycle.

Example 13. The conveyor oven of Example 10, wherein the executable instructions, when executed by the electronic processor, further cause the electronic processor to: determine a weighted value for at least one of the first heating element and the second heating element; and determine at least one of the first amount and the second amount based on the weighted value.

Example 14. The conveyor oven of Example 13, wherein the weighted value is based on at least one selected from a group consisting of a placement within the oven compartment, an operating direction of a conveyor belt, and an environment surrounding the conveyor oven.

Example 15. A system for controlling a conveyor oven, the system comprising: a memory; and an electronic processor coupled to the memory and a plurality of relays. The electronic processor is configured to retrieve, from the memory, executable instructions that, when executed by the electronic processor, cause the electronic processor to: determine, for each of a plurality of heating elements, a duty cycle; determine a maximum average current for the conveyor oven; determine a maximum combined duty cycle based on the maximum average current; determine a combined duty cycle based on the duty cycles for the plurality of heating elements; compare the maximum combined duty cycle to the combined duty cycle to determine a duty cycle overage; determine, for each of the plurality of heating elements, an adjusted duty cycle based on the duty cycle overage such that an adjusted combined duty cycle based on the adjusted duty cycles for the plurality of heating elements is less than or equal to the maximum combined duty cycle; and actuate a plurality of relays to energize the plurality of heating elements based on the adjusted duty cycles for the plurality of heating elements.

Example 16. The system of Example 15, wherein determining the adjusted duty cycle for each of the plurality of heating elements includes: for each of the plurality of heating elements, reducing the duty cycle by an amount; wherein the amounts for the plurality of heating elements add up to the duty cycle overage.

Example 17. The system of Example 16, wherein the amounts for the plurality of heating elements are equal.

Example 18. The system of Example 16, wherein for each of the plurality of heating elements, the amount is proportional to the duty cycle.

Example 19. The system of Example 16, wherein the executable instructions, when executed by the electronic processor, further cause the electronic processor to: determine a weighted value for at least one of the plurality of heating elements; and determine the amount for the at least one of the plurality of heating elements based on the weighted value.

Example 20. The system of Example 19, wherein the weighted value is based on at least one selected from a group consisting of a placement within an oven compartment, an operating direction of a conveyor belt, and an environment surrounding the conveyor oven.

Example 21. A conveyor oven comprising: an oven compartment; a first heating element disposed in the oven compartment; a first relay that controls a current flow to the first heating element; a second heating element disposed in the oven compartment; a second relay that controls a current flow to the second heating element; a power supply that receives external power and distributes internal power to the first heating element and the second heating element; a memory; and an electronic processor coupled to the memory, the power supply, the first relay, and the second relay. The electronic processor is configured to retrieve, from the memory, executable instructions that, when executed by the electronic processor, cause the electronic processor to: determine a first duty cycle for the first heating element; determine a second duty cycle for the second heating element, wherein the second duty cycle interval begins after a delay period from a start of the first duty cycle interval has elapsed; determine a maximum average current for the conveyor oven; determine a maximum combined duty cycle based on the maximum average current; determine a combined duty cycle based on the first duty cycle and the second duty cycle; compare the maximum combined duty cycle to the combined duty cycle to determine a duty cycle overage; adjust the first duty cycle and the second duty cycle based on the duty cycle overage such that the combined duty cycle is less than or equal to the maximum combined duty cycle; actuate the first relay based on the first duty cycle to energize the first heating element during a first duty cycle interval; and actuate the second relay based on the second duty cycle to energize the second heating element during a second duty cycle interval.

Example 22. A non-transitory computer-readable medium including instructions executable by an electronic processor to perform a set of functions, the set of functions comprising: determine a first duty cycle for a first heating element of a conveyor oven; determine a second duty cycle for a second heating element of the conveyor oven, wherein the second duty cycle interval begins after a delay period from a start of the first duty cycle interval has elapsed; determine a maximum average current for the conveyor oven; determine a maximum combined duty cycle based on the maximum average current; determine a combined duty cycle based on the first duty cycle and the second duty cycle; compare the maximum combined duty cycle to the combined duty cycle to determine a duty cycle overage; adjust the first duty cycle and the second duty cycle based on the duty cycle overage such that the combined duty cycle is less than or equal to the maximum combined duty cycle; actuate a first relay based on the first duty cycle to energize the first heating element during a first duty cycle interval; and actuate a second relay based on the second duty cycle to energize the second heating element during a second duty cycle interval.

Example 23. A non-transitory computer-readable medium including instructions executable by an electronic processor to perform a set of functions, the set of functions comprising: determine, for each of a plurality of heating elements of a conveyor oven, a duty cycle; determine a maximum average current for the conveyor oven; determine a maximum combined duty cycle based on the maximum average current; determine a combined duty cycle based on the duty cycles for the plurality of heating elements; compare the maximum combined duty cycle to the combined duty cycle to determine a duty cycle overage; determine, for each of the plurality of heating elements, an adjusted duty cycle based on the duty cycle overage such that an adjusted combined duty cycle based on the adjusted duty cycles for the plurality of heating elements is less than or equal to the maximum combined duty cycle; and actuate a plurality of relays to energize the plurality of heating elements based on the adjusted duty cycles for the plurality of heating elements.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

It will be appreciated that many features in the dependent claims that follow can be used in combination with other features. We hereby disclose not only the claims below but also the claims below with the claim dependency of the dependent claims to be dependent from any preceding claim.

## Claims

1. A conveyor (140) oven (100) comprising:
an oven compartment (120);
a first heating element (350) disposed in the oven compartment (120);
a first relay (325) that controls a current flow to the first heating element (350);
a second heating element (355) disposed in the oven compartment (120);
a second relay (330) that controls a current flow to the second heating element (355);
a power supply (300) that receives external power and distributes internal power to the first heating element (350) and the second heating element (355);
a memory (210); and
an electronic processor (205) coupled to the memory (210), the power supply (300), the first relay (325), and the second relay (330);
wherein the electronic processor (205) is configured to retrieve, from the memory (210), executable instructions that, when executed by the electronic processor (205), cause the electronic processor (205) to:
determine a first duty cycle for the first heating element (350);
determine a second duty cycle for the second heating element (355);
actuate the first relay (325) based on the first duty cycle to energize the first heating element (350) during a first duty cycle interval; and
actuate the second relay (330) based on the second duty cycle to energize the second heating element (355) during a second duty cycle interval;
wherein the second duty cycle interval begins after a delay period from a start of the first duty cycle interval has elapsed.

2. The conveyor (140) oven (100) of claim 1, wherein
the first duty cycle interval has a first duration; and
the second duty cycle interval has a second duration equal to the first duration.

3. The conveyor (140) oven (100) of either of claim 1, wherein the executable instructions, when executed by the electronic processor (205), further cause the electronic processor (205) to:
determine a maximum allowable current spike; and
determine the delay period based on the first duty cycle, the second duty cycle, and the maximum allowable current spike.

4. The conveyor (140) oven (100) of claim 1, wherein the executable instructions, when executed by the electronic processor (205), further cause the electronic processor (205) to:
determine a maximum average current for the conveyor (140) oven (100); and
determine the delay period based on the first duty cycle, the second duty cycle, and the maximum average current.

5. The conveyor (140) oven (100) of claim 1, further comprising:
a temperature sensor positioned within the oven compartment (120) and coupled to the electronic processor (205);
wherein the executable instructions, when executed by the electronic processor (205), further cause the electronic processor (205) to:
receive a measured temperature for the oven compartment (120); and
continue to actuate the first relay (325) based on the first duty cycle and the second relay (330) based on the second duty cycle by repeating the first duty cycle interval and the second duty cycle interval while the measured temperature is less than a user adjustable temperature setpoint.

6. The conveyor (140) oven (100) of claim 1, further comprising:
a third heating element (360) disposed in the oven compartment (120); and
a third relay (335) that controls a current flow to the third heating element (360);
wherein:
the power supply (300) distributes internal power to the third heating element (360);
the electronic processor (205) is coupled to the third relay (335); and
the electronic processor (205) is configured to retrieve, from the memory (210), executable instructions that, when executed by the electronic processor (205), cause the electronic processor (205) to:
determine a third duty cycle for the third heating element (360); and
actuate the third relay (335) based on the third duty cycle to energize the third heating element (360) during a third duty cycle interval;
wherein the third duty cycle interval begins after a delay period from a start of the second duty cycle interval has elapsed.

7. The conveyor (140) oven (100) of claim 6, further comprising:
a fourth heating element (365) disposed in the oven compartment (120); and
a fourth relay (340) that controls a current flow to the fourth heating element (365);
wherein:
the power supply (300) distributes internal power to the fourth heating element (365);
the electronic processor (205) is coupled to the fourth relay (340); and
the electronic processor (205) is configured to retrieve, from the memory (210), executable instructions that, when executed by the electronic processor (205), cause the electronic processor (205) to:
determine a fourth duty cycle for the fourth heating element (365); and
actuate the fourth relay (340) based on the fourth duty cycle to energize the fourth heating element (365) during a fourth duty cycle interval;
wherein the fourth duty cycle interval begins after a delay period from a start of the third duty cycle interval has elapsed.

8. The conveyor (140) oven (100) of claim 1, further comprising:
a conveyor (140) extending through the oven compartment (120); and
a motor that drives the conveyor (140) to convey product through the oven compartment (120).

9. The conveyor (140) oven (100) of claim 1, wherein the executable instructions, when executed by the electronic processor (205), further cause the electronic processor (205) to:
determine a maximum average current for the conveyor (140) oven (100);
determine a maximum combined duty cycle based on the maximum average current;
determine a combined duty cycle based on the first duty cycle and the second duty cycle;
compare the maximum combined duty cycle to the combined duty cycle to determine a duty cycle overage; and
adjust the first duty cycle and the second duty cycle based on the duty cycle overage such that the combined duty cycle is less than or equal to the maximum combined duty cycle.

10. The conveyor (140) oven (100) of claim 9, wherein adjusting the first duty cycle and the second duty cycle based on the duty cycle overage includes:
reducing the first duty cycle by a first amount; and
reducing the second duty cycle by a second amount;
wherein the first amount and the second amount add up to the duty cycle overage.

11. The conveyor (140) oven (100) of claim 10, wherein the first amount is equal to the second amount.

12. The conveyor (140) oven (100) of claim 10, wherein
the first amount is proportional to the first duty cycle;
and the second amount is proportional to the second duty cycle.

13. The conveyor (140) oven (100) of claim 10, wherein the executable instructions, when executed by the electronic processor (205), further cause the electronic processor (205) to:
determine a weighted value for at least one of the first heating element (350) and the second heating element (350); and
determine at least one of the first amount and the second amount based on the weighted value.

14. The conveyor (140) oven (100) of claim 13, wherein the weighted value is based on at least one selected from a group consisting of a placement within the oven compartment (120), an operating direction of a conveyor (140) belt, and an environment surrounding the conveyor (140) oven (100).

15. A system for controlling a conveyor (140) oven (100), the system comprising:
a memory (210); and
an electronic processor (205) coupled to the memory (210) and a plurality of relays (420) (320);
wherein the electronic processor (205) is configured to retrieve, from the memory (210), executable instructions that, when executed by the electronic processor (205), cause the electronic processor (205) to:
determine, for each of a plurality of heating elements (305), a duty cycle;
determine a maximum average current for the conveyor (140) oven (100);
determine a maximum combined duty cycle based on the maximum average current;
determine a combined duty cycle based on the duty cycles for the plurality of heating elements (305);
compare the maximum combined duty cycle to the combined duty cycle to determine a duty cycle overage;
determine, for each of the plurality of heating elements (305), an adjusted duty cycle based on the duty cycle overage such that an adjusted combined duty cycle based on the adjusted duty cycles for the plurality of heating elements (305) is less than or equal to the maximum combined duty cycle; and
actuate a plurality of relays (320) to energize the plurality of heating elements (305) based on the adjusted duty cycles for the plurality of heating elements (305).

## Amended claims

### Amended claims in accordance with Rule 137(2) EPC.

1. A conveyor (140) oven (100) comprising:
an oven compartment (120);
a first heating element (350) disposed in the oven compartment (120);
a first relay (325) that controls a current flow to the first heating element (350);
a second heating element (355) disposed in the oven compartment (120);
a second relay (330) that controls a current flow to the second heating element (355);
a power supply (300) that receives external power and distributes internal power to the first heating element (350) and the second heating element (355);
a memory (210); and
an electronic processor (205) coupled to the memory (210), the power supply (300), the first relay (325), and the second relay (330);
wherein the electronic processor (205) is configured to retrieve, from the memory (210), executable instructions that, when executed by the electronic processor (205), cause the electronic processor (205) to:
determine a first duty cycle for the first heating element (350);
determine a second duty cycle for the second heating element (355);
actuate the first relay (325) based on the first duty cycle to energize the first heating element (350) during a first duty cycle interval;
actuate the second relay (330) based on the second duty cycle to energize the second heating element (355) during a second duty cycle interval; and
determine a duty cycle offset for the start of the second duty cycle interval from the start of the first duty cycle interval based on a maximum allowable current spike;
wherein the second duty cycle interval begins after the duty cycle offset has elapsed.

2. The conveyor (140) oven (100) of claim 1, wherein
the first duty cycle interval has a first duration; and
the second duty cycle interval has a second duration equal to the first duration.

3. The conveyor (140) oven (100) of either of claim 1, wherein the executable instructions, when executed by the electronic processor (205), further cause the electronic processor (205) to:
determine a maximum allowable current spike; and
determine the delay period based on the first duty cycle, the second duty cycle, and the maximum allowable current spike.

4. The conveyor (140) oven (100) of claim 1, wherein the executable instructions, when executed by the electronic processor (205), further cause the electronic processor (205) to:
determine a maximum average current for the conveyor (140) oven (100); and
determine the delay period based on the first duty cycle, the second duty cycle, and the maximum average current.

5. The conveyor (140) oven (100) of claim 1, further comprising:
a temperature sensor positioned within the oven compartment (120) and coupled to the electronic processor (205);
wherein the executable instructions, when executed by the electronic processor (205), further cause the electronic processor (205) to:
receive a measured temperature for the oven compartment (120); and
continue to actuate the first relay (325) based on the first duty cycle and the second relay (330) based on the second duty cycle by repeating the first duty cycle interval and the second duty cycle interval while the measured temperature is less than a user adjustable temperature setpoint.

6. The conveyor (140) oven (100) of claim 1, further comprising:
a third heating element (360) disposed in the oven compartment (120); and
a third relay (335) that controls a current flow to the third heating element (360);
wherein:
the power supply (300) distributes internal power to the third heating element (360);
the electronic processor (205) is coupled to the third relay (335); and
the electronic processor (205) is configured to retrieve, from the memory (210), executable instructions that, when executed by the electronic processor (205), cause the electronic processor (205) to:
determine a third duty cycle for the third heating element (360); and
actuate the third relay (335) based on the third duty cycle to energize the third heating element (360) during a third duty cycle interval;
wherein the third duty cycle interval begins after a delay period from a start of the second duty cycle interval has elapsed.

7. The conveyor (140) oven (100) of claim 6, further comprising:
a fourth heating element (365) disposed in the oven compartment (120); and
a fourth relay (340) that controls a current flow to the fourth heating element (365);
wherein:
the power supply (300) distributes internal power to the fourth heating element (365);
the electronic processor (205) is coupled to the fourth relay (340); and
the electronic processor (205) is configured to retrieve, from the memory (210), executable instructions that, when executed by the electronic processor (205), cause the electronic processor (205) to:
determine a fourth duty cycle for the fourth heating element (365); and
actuate the fourth relay (340) based on the fourth duty cycle to energize the fourth heating element (365) during a fourth duty cycle interval;
wherein the fourth duty cycle interval begins after a delay period from a start of the third duty cycle interval has elapsed.

8. The conveyor (140) oven (100) of claim 1, further comprising:
a conveyor (140) extending through the oven compartment (120); and
a motor that drives the conveyor (140) to convey product through the oven compartment (120).

9. The conveyor (140) oven (100) of claim 1, wherein the executable instructions, when executed by the electronic processor (205), further cause the electronic processor (205) to:
determine a maximum average current for the conveyor (140) oven (100);
determine a maximum combined duty cycle based on the maximum average current;
determine a combined duty cycle based on the first duty cycle and the second duty cycle;
compare the maximum combined duty cycle to the combined duty cycle to determine a duty cycle overage; and
adjust the first duty cycle and the second duty cycle based on the duty cycle overage such that the combined duty cycle is less than or equal to the maximum combined duty cycle.

10. The conveyor (140) oven (100) of claim 9, wherein adjusting the first duty cycle and the second duty cycle based on the duty cycle overage includes:
reducing the first duty cycle by a first amount; and
reducing the second duty cycle by a second amount;
wherein the first amount and the second amount add up to the duty cycle overage.

11. The conveyor (140) oven (100) of claim 10, wherein the first amount is equal to the second amount.

12. The conveyor (140) oven (100) of claim 10, wherein
the first amount is proportional to the first duty cycle;
and the second amount is proportional to the second duty cycle.

13. The conveyor (140) oven (100) of claim 10, wherein the executable instructions, when executed by the electronic processor (205), further cause the electronic processor (205) to:
determine a weighted value for at least one of the first heating element (350) and the second heating element (350); and
determine at least one of the first amount and the second amount based on the weighted value.

14. The conveyor (140) oven (100) of claim 13, wherein the weighted value is based on at least one selected from a group consisting of a placement within the oven compartment (120), an operating direction of a conveyor (140) belt, and an environment surrounding the conveyor (140) oven (100).

15. A system for controlling a conveyor (140) oven (100), the system comprising:
a memory (210); and
an electronic processor (205) coupled to the memory (210) and a plurality of relays (420) (320);
wherein the electronic processor (205) is configured to retrieve, from the memory (210), executable instructions that, when executed by the electronic processor (205), cause the electronic processor (205) to:
determine, for each of a plurality of heating elements (305), a duty cycle;
determine a maximum average current for the conveyor (140) oven (100);
determine a maximum combined duty cycle based on the maximum average current;
determine a combined duty cycle based on the duty cycles for the plurality of heating elements (305);
compare the maximum combined duty cycle to the combined duty cycle to determine a duty cycle overage;
determine, for each of the plurality of heating elements (305), an adjusted duty cycle based on the duty cycle overage such that an adjusted combined duty cycle based on the adjusted duty cycles for the plurality of heating elements (305) is less than or equal to the maximum combined duty cycle; and
actuate a plurality of relays (320) to energize the plurality of heating elements (305) based on the adjusted duty cycles for the plurality of heating elements (305).
